# EUROPÄISCHE PATENTSCHRIFT

(11) **EP 2 819 944 B1**
(45) Veröffentlichungstag und Bekanntmachung des Hinweises auf die Patenterteilung: **30.03.2016**
(21) Anmeldenummer: 13706247.7
(22) Anmeldetag: 25.02.2013
(51) Int. Cl.: B67B 3/26

(54) **VERFAHREN UND VORRICHTUNG ZUM BERÜHRUNGSLOSEN PRÜFEN EINES SCHRAUBVERSCHLUSSDREHMOMENTS**
METHOD AND DEVICE TO CHECK THE TORQUE OF A SCREW CLOSURE
PROCEDE ET DISPOSITIF POUR MESURER LE COUPLE DE SERRAGE D'UN BOUCHON A VIS

(30) Priorität: 27.02.2012 DE 102012003809
(43) Veröffentlichungstag der Anmeldung: 07.01.2015
(73) Patentinhaber: Heuft Systemtechnik GmbH, 56659 Burgbrohl (DE)
(72) Erfinder: HEUFT, Bernhard, 56659 Burgbrohl (DE)
(74) Vertreter: Gritschneder, Sebastian
(86) Internationale Anmeldenummer: PCT/EP2013/053662
(87) Internationale Veröffentlichungsnummer: WO 2013/127719

(56) Entgegenhaltungen:
- EP-A1- 0 467 091
- WO-A1-2011/030209
- DE-A1-102006 025 811
- JP-A- 2009 008 637

## Beschreibung

Die Erfindung betrifft ein Verfahren zum berührungslosen Prüfen, ob ein Drehmoment, das zum Öffnen eines auf eine Flasche aufgeschraubten Kunststoff-Schraubverschlusses notwendig ist, einem vorgegebenen Wert entspricht. Gegenstand der Erfindung ist ferner eine Vorrichtung zur Durchführung dieses Verfahrens.

Kunststoff-Schraubverschlüsse für Flaschen sind aus DE 24 39 414 A und DE 20 2007 009 983 U1 bekannt. Die Steigung des eingängigen Gewindes eines Kunststoff-Schraubverschlusses liegt bei 2-3 mm. Kunststoff-Schraubverschlüsse werden in einer Verschließmaschine auf die durchlaufenden Flaschen aufgedreht, indem ein mitlaufender Verschließkopf jeweils einen lose auf die Flaschenmündung aufgelegten Verschluss umfasst und festdreht.

Beim Aufschrauben eines Kunststoff-Schraubverschlusses auf eine Flasche wird das beim Festdrehen angewendete Drehmoment nach Erfahrungswerten eingestellt. Ist dieses Drehmoment zu schwach eingestellt, dann besteht die Gefahr, dass die Flasche undicht wird. Ist das Drehmoment dagegen zu hoch eingestellt, so benötigen die Verbraucher zum Öffnen des Kunststoff-Schraubverschlusses Hilfsmittel, was ebenfalls unerwünscht ist.

Nach dem Stand der Technik wird das zum Öffnen eines Kunststoff-Schraubverschlusses erforderliche Drehmoment manuell geprüft, indem die Flaschen mittels eines Drehmoment-Messgerätes von Hand geöffnet und die Messwerte festgehalten werden. Dieses Verfahren kann auch automatisiert werden, indem in bestimmten zeitlichen Abständen eine Flasche automatisch ausgeleitet wird und dann das Drehmoment ermittelt wird, das nötig ist, um den Verschluss geringfügig auf- und dann wieder zuzudrehen.

Aus DE 10 2008 062 385 ist ein Verfahren bekannt, mittels dessen festgestellt werden kann, ob bei Kunststoffbehältern ein Originalitätsverschluss bereits beim Verschließen der Kappe verletzt wurde. Dazu werden die Originalitätsverschlüsse schräg von unten beleuchtet und von der gegenüberliegenden Seite aus mittels eines opto-elektrischen Sensorsystems untersucht. Es wird also nicht das Drehmoment zum Öffnen des Verschlusses geprüft.

Aus EP 1 293 473 ist ein Verfahren bekannt, bei dem der korrekte Sitz des Verschlusses auf der Flasche geprüft wird. Dazu werden verschiedene Parameter ermittelt, unter anderem die Höhe der Flasche und die aufrechte Ausrichtung des Verschlusses. Auch bei diesem Verfahren wird nicht das zum Öffnen des Verschlusses notwendige Drehmoment geprüft. Aus EP 2 439 488 ist ein Verfahren bekannt, mittels dessen bei einem Rohling zum Blasformen einer Kunststoffflasche die Drehlage des Gewindeabschnitts festgestellt wird. Die Drehlage wird zum Beispiel aus dem Abstand zwischen Mündungskante und Gewindegang ermittelt oder aus einem Vergleich des Öffnungsabschnittes mit einer Vielzahl gespeicherter Vorlagen. Auch bei diesem Verfahren wird nicht das zum Öffnen des Verschlusses notwendige Drehmoment geprüft.

Aus EP 0 572 758 ist es bekannt, das Etikett und den Verschluss einer Flasche in eine vorgegebene Orientierung zueinander zu bringen. Dazu wird die Orientierung jeder Flasche mechanisch oder optisch mittels Marken an der Flasche ermittelt und wird der Verschluss entsprechend der Orientierung der Flasche aufgebracht. Die Flasche und der Verschluss befinden sich dadurch in einer vorgegebenen relativen Drehlage.

Aus JP 2009 008637 ist ein Verfahren gemäß dem Oberbegriff des Anspruchs 1 zum berührungslosen Prüfen eines Drehmoments zum Öffnen eines auf einer Flasche aufgeschraubten Schraubverschlusses bekannt, bei dem die relative Position zwischen einer eigens aufgebrachten Markierung am Schraubverschluss und an der Flasche mittels einer Kamera bestimmt wird. Die Kamera befindet sich oberhalb des Schraubverschlusses und ist zum Auffinden der Markierung 360° um die Flasche bewegbar.

Der Erfindung liegt die Aufgabe zu Grunde, ein Verfahren anzugeben, mittels dessen sich im laufenden Produktionsprozess berührungslos bei einer beliebigen Anzahl von Flaschen oder bei jeder Flasche feststellen lässt, ob der jeweilige Kunststoff-Schraubverschluss zu fest oder zu locker auf die Flasche aufgeschraubt ist.

Erfindungsgemäß wird diese Aufgabe durch ein Verfahren nach Anspruch 1 gelöst, wobei mittels Bildauswertung anhand einer Marke bzw. Markierung an der Flasche und einer Marke bzw. Markierung an dem Schraubverschluss die Drehlage des aufgeschraubten Kunststoff-Schraubverschlusses gegenüber der Flasche festgestellt wird, wobei die Feststellung der Drehlage der Flasche oder des Schraubverschlusses mittels eines Strahlenbündels erfolgt, das unterhalb des Schraubverschlusses schräg nach oben so auf eine Seite der Flasche gerichtet wird, dass auf der gegenüberliegenden Seite der Flasche die Flaschenmündung von innen beleuchtet wird, dass die Außenseite des Schraubverschlusses mittels einer Kamera erfasst wird und dass die erfasste Abbildung ausgewertet wird.

Die Vorrichtung zur Durchführung des erfindungsgemäßen Verfahrens gemäß Anspruch 10 weist mindestens eine Lichtquelle auf einer Seite eines durchlaufenden Stroms von Flaschen auf, die mittels Kunststoff-Schraubverschlüssen verschlossen sind, wobei die Lichtquelle ein Strahlenbündel an einer Stelle unterhalb des Schraubverschlusses auf die jeweils untersuchte Flasche so richtet, dass die dieser Stelle gegenüberliegende Innenseite der Flasche und des Schraubverschlusses beleuchtet wird, sowie mindestens eine optische Erfassungseinrichtung bzw. Kamera auf der anderen, der Lichtquelle gegenüberliegenden Seite des Flaschenstroms. Die Erfassungseinrichtung erfasst optisch das Bild der Außenseite der beleuchteten Innenseite. Die Vorrichtung weist ferner eine Einrichtung zur Auswertung des erfassten Bildes auf, wobei die relative Drehlage des Schraubverschlusses gegenüber der Flasche bestimmt wird.

Bei der Erfindung wird demnach der Zusammenhang zwischen der relativen Winkelposition des Schraubverschlusses gegenüber der Flasche und dem gewünschten Drehmoment zum Öffnen der Flasche ausgenutzt. Der optimale Wert der Drehlage des Kunststoff-Schraubverschlusses gegenüber der Flasche wird empirisch ermittelt. Ebenso wird die tolerierbare Abweichung von diesem Wert empirisch ermittelt. Bei üblichen Getränkeflaschen liegt der Toleranzbereich z.B. bei einem Winkel von etwa 15°, also ± 7,5°, vorzugsweise etwa ± 5°, weiter vorzugsweise etwa ± 3°; alles, was darüber liegt, ist zu schwer zu öffnen, alles, was darunter liegt, ist möglicherweise undicht. In beiden Fällen wird die betreffende Flasche dann aus dem weiteren Produktionsverfahren ausgesondert.

Die Lichtquelle oder Beleuchtungseinheit ist so ausgebildet, dass sie etwa den halben Umfang des Flaschenhalses unterhalb des Kunststoff-Schraubverschlusses beleuchtet. Die Lichtquelle kann zum Beispiel eine Mehrzahl von Lichtleitfasern aufweisen, deren Austrittsöffnungen auf einem Kreisbogenabschnitt angeordnet sind. Die von den einzelnen Lichtleitfasern ausgesandten Lichtbündel sind auf einen etwa halbkreisförmigen Bereich unmittelbar unterhalb des Kunststoff-Verschlusses oder eines dort üblicherweise vorhandenen Tragringes gerichtet. Die Lichtquelle kann auch eine Anzahl entsprechend angeordneter und ausgerichteter LEDs aufweisen.

Das von der Lichtquelle oder Beleuchtungseinheit erzeugte Strahlenbündel ist dabei unter einem Winkel von zum Beispiel 30° nach oben gerichtet. Da das von der Lichtquelle erzeugte Strahlenbündel im Bereich unter dem Rand des Schraubverschlusses oder des Tragringes hindurch tritt, wird der gegenüberliegende Halbkreis der Flaschenmündung und des Schraubverschlusses gleichsam von innen beleuchtet. Vorzugsweise bestehen die Flaschen zumindest im Bereich des Flaschenhalses aus transparentem Material, so dass das unterhalb des Schraubverschlusses auf den Flaschenhals gerichtete Strahlenbündel der Lichtquelle möglichst wenig absorbiert wird. Durch das gerichtete Strahlenbündel der Lichtquelle werden Gewinde und sonstige Details einschließlich dort eventuell vorhandener Marken der Flaschenmündung auf dem Kunststoff-Schraubverschluss von innen wie auf einem Projektionsschirm abgebildet. Die Linsenwirkung der Gewindegänge sowie die Brechung des Lichts an den Kanten eventueller Marken ergeben ein scharfes Bild auf dem Halbkreis des Kunststoff-Schraubverschlusses, der der Lichtquelle gegenüber liegt. Das Material der Kunststoff-Schraubverschlüsse enthält zwar üblicherweise Pigmente, ist jedoch semi-transparent. In den Tälern der Gewindegänge ist die Materialstärke des Schraubverschlusses reduziert, wodurch sich die Gewindegänge auf der Außenseite des Verschlusses abzeichnen. Diese Abbildung wird von der optischen Erfassungseinrichtung erfasst und kann mittels Bildverarbeitung ausgewertet werden. Ebenso zeichnen sich eventuelle Marken auf der Außenseite des Kunststoff-Verschlusses ab und können mittels Bildverarbeitung ausgewertet werden.

Zur Beleuchtung eignen sich weiße LEDs oder solche in der Farbe des Schraubverschlusses, die die manchmal sehr geringe Transparenz der Schraubverschlüsse von Getränkeflaschen maximal ausnutzen. Insbesondere Infrarot-LEDs eignen sich besonders zur Beleuchtung der vielen Farbpigmente, da diese im Infrarotlicht meistens nur eine geringe Absorption aufweisen.

Es können zwei derartige etwa halbkreisförmige Beleuchtungseinheiten gegenüberliegend und seitlich neben den durchlaufenden Flaschen so angeordnet werden, dass die Flaschen noch ungehindert zwischen den Lichtquellen durchlaufen können. Durch die beiden halbkreisförmigen Beleuchtungseinheiten wird der der jeweiligen Beleuchtungseinheit gegenüberliegende Halbkreis der Flaschenmündung und des Schraubverschlusses beleuchtet. Insgesamt wird dadurch der gesamte Umfang der Flaschenmündung auf der Außenseite des Kunststoff-Schraubverschlusses abgebildet.

Auf der Kameraseite gibt es mehrere Möglichkeiten zur Erfassung des gesamten Umfangs des Schraubverschlusses. So können beispielsweise vier Kameras oberhalb der Flasche seitlich angeordnet werden, so dass jede Kamera einen Quadranten des Schraubverschlusses erfasst. Durch den Einsatz eines Spiegelkabinetts können jeweils zwei Bilder in einer Aufnahme zusammengefasst werden, so dass man mit zwei Kameras auskommt. Weiterhin ist es auch möglich, mit nur einer einzigen Kamera über einen kegelförmigen Spiegel im Zusammenspiel mit einem zylinderförmigen Spiegel die gesamte Oberfläche des Schraubverschlusses zu erfassen.

Die Stellung oder Drehlage der Flasche gegenüber dem Kunststoff-Schraubverschluss kann anhand einer Marke an der Flasche und einer Marke an dem Schraubverschluss festgestellt werden. Eine Möglichkeit ist demnach, auf der Flasche sowie auf dem Schraubverschluss Marken anzubringen, die leicht erkennbar sind und mittels Kameratechnologie (CCD-Kamera) mit Bildverarbeitung ausgewertet werden. Der einfachste Weg ist es, eine Marke auf der Außenseite der Flasche anzubringen, sowie eine Marke auf der Oberseite des Schraubverschlusses zu platzieren, dann beide mit einer oder mehreren Kameras von oben zu erfassen und den Winkelversatz zwischen dem Kunststoff-Schraubverschluss und der Flasche auszuwerten. Dies ist von dem Erkennungsverfahren her sehr einfach, bedingt aber zusätzlichen Aufwand bei den Schraubverschlüssen und den Flaschen.

Der zusätzliche Aufwand bei den Kunststoff-Schraubverschlüssen ist allerdings relativ gering, da diese Verschlüsse nicht recycelt werden und auch Mehrwegflaschen bei der Wiederverwendung einen neuen Schraubverschluss erhalten. Vorzugsweise wird daher der Schraubverschluss als Marke mit mindestens einer solchen Markierung versehen, dass sich im Öffnungswinkel einer Kamera, die für die Bildauswertung eingesetzt wird, immer mindestens eine Marke befindet.

Bei den in Deutschland vielfach benutzten Mehrwegflaschen, die alle keine leicht erkennbare Marke besitzen, wäre diese einfache Lösung nicht gangbar, da die sich bereits im Umlauf befindlichen Flaschen ersetzt werden müssten, so dass hier eine Umstellung erheblich aufwendiger ist. Es besteht jedoch die Möglichkeit, markante Punkte an der Flaschenmündung zu erkennen und als Marke zu nutzen. Dadurch wird die Erfindung auch bei sich bereits im Umlauf befindlichen Flaschen anwendbar.

Vorzugsweise werden Anfang und/oder Ende des Schraubgewindes am Flaschenhals als Marke zur Feststellung der Drehlage der Flasche verwendet.

Vorzugsweise werden für die Feststellung der Drehlage der Flasche mindestens zwei Marken ausgewertet.

Vorzugsweise werden als markante Punkte der Flaschenmündung die bei KunststoffFlaschen häufig vorhandenen Vent-Slots oder Entlüftungsschlitze verwendet, die die Gewindegänge des Schraubgewindes am Flaschenhals unterbrechen.

Vorzugsweise ist eine Marke der Anfang und/oder das Ende des Schraubgewindes am Flaschenhals und sind eine zweite Marke die Entlüftungsschlitze, die die Gewindegänge des Schraubgewindes am Flaschenhals unterbrechen.

Auch bei den Kunststoff-Schraubverschlüssen ist eine spezielle Markierung nicht notwendig und reichen die konstruktiven Details üblicher Schraubverschlüsse zur Feststellung der Drehlage aus. Als markanter Punkt des Schraubverschlusses kann z.B. die Sollbruchstelle des Sicherungsringes verwendet werden, der bei Kunststoff-Verschlüssen üblicherweise vorhanden ist und als Sicherung der Unverfälschtheit des Flascheninhalts dient. Der Sicherungsring ist mittels Verbindungsstegen unten von dem Kunststoff-Schraubverschluss abgehängt.

Als Marke zur Feststellung der Drehlage des Schraubverschlusses kommt ferner das Gewinde des Schraubverschlusses, ein Entlüftungsschlitz in dem Schraubverschluss und/oder eine Variation in einer Riffelung des Umfangs des Schraubverschlusses in Frage.

Vorzugsweise werden auch bei dem Schraubverschluss mindestens zwei Marken zur Feststellung der Drehlage verwendet.

Weitere Möglichkeiten zur Bestimmung der Drehlage des Schraubverschlusses ergeben sich bei einer asymmetrischen Anordnung der Verbindungsstege, mit denen der Sicherungsring am kappenförmigen Hauptteil des Schraubverschlusses befestigt ist, oder durch asymmetrische Gestaltung des Umfangs des Schraubverschlusses, was im einfachsten Fall durch Weglassen einer oder mehrerer Kerben der Rändelung auf dem Umfang des Schraubverschlusses zu erreichen ist. Jede andere Marke auf dem Umfang des Schraubverschlusses ist jedoch ebenfalls geeignet.

Durch spezielle Ausprägung der Schraubverschlussmerkmale ist es auch möglich, die Drehlage des Schraubverschlusses mit einer einzigen Kamera zu erfassen, ohne dass die gesamte Umfangsfläche des Schraubverschlusses erfasst werden muss. Die umlaufende Riffelung des Schraubverschlusses kann so ausgestaltet werden, dass man aus dem betrachteten Ausschnitt einen eindeutigen Winkel in Bezug auf eine angenommene Null-Linie bestimmen kann, die die Kamera-Blickrichtung darstellt. Auf dem Umfang des Schraubverschlusses kann zum Beispiel zusätzlich zur Rändelung eine sich über den gesamten Umfang erstreckende gewendelte Linie positiv oder negativ eingeprägt sein, die aus einem einzigen Gewindegang einer Schraubenlinie großer Steigung besteht.

Im selben Bild kann dann auch die Information über die Drehlage der Flasche enthalten sein, die anhand der Entlüftungsschlitze im Zusammenhang mit der Gewindesteigung exakt und eindeutig bestimmt werden kann. Dies kann folgendermaßen geschehen: Über ein Spiegelkabinett wird ein Bildausschnitt von etwa 150° des Umfangs inspiziert. Damit ist sichergestellt, dass sich mindestens ein gut sichtbarer Entlüftungsschlitz der Flaschenmündung in dem betrachteten Bildausschnitt befindet. Bei dem gut sichtbaren Entlüftungsschlitz wird dann untersucht, in welcher Höhe er von den einzelnen Gewindegängen geschnitten wird. Unter "Höhe" wird dabei der Abstand vom oberen oder unteren Rand des Schraubverschlusses verstanden. Bei den üblichen vier Lüftungsschlitzen gibt es auch nur vier korrespondierende Sätze von Werten der Höhen der Schnittpunkte mit den Gewindegängen. Aus der Abbildung eines Lüftungsschlitzes kann daher eindeutig bestimmt werden, um welchen der vier Entlüftungsschlitze es sich handelt. Unter Berücksichtigung dieser Information und der bekannten gegenseitigen Anordnung der Entlüftungsschlitze (Addieren eines Offsets entsprechend der gefundenen Schlitznummer) sowie der Position des Entlüftungsschlitzes innerhalb des Bildes ergibt sich die Winkelposition der Flasche gegenüber der Null-Linie, die durch die Kamera-Position festgelegt ist.

Bei den bisher beschriebenen Verfahren werden die Drehlagen der Flasche und des Verschlusses zunächst separat mit der optischen Achse der Erkennungseinrichtung verglichen und dann zueinander in Beziehung gesetzt. In einer bevorzugten Ausgestaltung der Erfindung werden die Drehlagen der Flasche und des Verschlusses nicht separat mit der optischen Achse der Erkennungseinrichtung verglichen und dann zueinander in Beziehung gesetzt, sondern wird eine Marke des Schraubverschlusses direkt mit einer Marke der Flasche in Beziehung gesetzt. Dabei kann ausgenutzt werden, dass sich Entlüftungsschlitze häufig nicht nur im Gewinde der Flaschenmündung, sondern auch im Gewinde des Kunststoff-Schraubverschlusses befinden. Die Lüftungsschlitze des Schraubverschlusses können daher so angeordnet werden, dass sie sich bei dem vorgegebenen Wert des Drehmoments genau gegenüber den Entlüftungsschlitzen an der Flaschenmündung liegen oder diesen gegenüber einen vorgegebenen Winkelabstand aufweisen. Die relative Anordnung der Entlüftungsschlitze kann insbesondere so gewählt werden, dass der Schraubverschluss gerade dann beginnt, undicht zu werden und Druck abzulassen, wenn sich die Entlüftungsschlitze genau gegenüber liegen. Je fester eine Flasche verschlossen ist, umso größer wird der Abstand zwischen den jeweiligen Entlüftungsschlitzen. Der Abstand der sich gegenüberliegenden Entlüftungsschlitze gegenüber dem Zustand, in dem das zum Öffnen erforderliche Drehmoment den optimalen Wert hat, beträgt nur wenige Grad. Die Zuordnung der Entlüftungsschlitze ist daher immer eindeutig, was bedeutet, dass in dem 120°-Blickwinkel einer Kamera immer mindestens ein solches Pärchen von Entlüftungsschlitzen fällt und daher mit einer einzigen Kamera und der Auswertung eines einzigen Bildes die Bildauswertung erfolgen kann.

Neben der Erkennung einzelner zu fest oder zu leicht verschlossener Flaschen kann die Erkennung noch erheblich präzisiert werden, indem Verschließkopf-abhängige Mittelwerte gebildet werden, die schon nach kurzer Zeit sichere Aussagen darüber liefern können, welche der Verschließköpfe in welche Richtung nachjustiert werden müssen.

Die Erfindung lässt sich auch in der Weise einsetzen, dass bei einer unzulässigen Abweichung der Drehlage des Schraubverschlusses von der Drehlage der Flasche die Drehlage des Schraubverschlusses entsprechend korrigiert wird. Die Schraubverschlüsse können auch zunächst mit einem zu geringen Drehmoment aufgeschraubt werden, wobei dann mittels des erfindungsgemäßen Verfahrens festgestellt wird, um welchen Winkel die Schraubverschlüsse noch weiter gedreht werden müssen. Mittels eines weiteren Verschließkopfes können die Schraubverschlüsse dann um diesen Winkel weiter gedreht oder aufgeschraubt werden.

Kunststoff-Schraubverschlüsse lassen sich sowohl bei Glasflaschen als auch bei Kunststoffflaschen verwenden, und das erfindungsgemäße Verfahren ist demgemäß sowohl in Verbindung mit Glasflaschen als auch mit Kunststoffflaschen einsetzbar. Besonders geeignet ist das erfindungsgemäße Verfahren jedoch in Verbindung mit PET-Flaschen.

Ein Ausführungsbeispiel der Erfindung wird nachfolgend anhand der Zeichnung erläutert. Es zeigen:
Figur 1 die Anordnung des Halses einer Flasche mit aufgedrehtem Schraubverschluss zwischen einer Beleuchtungseinheit und einr CCD-Kamera;
Figur 2 die Flaschenmündung mit aufgedrehtem Schraubverschluss.

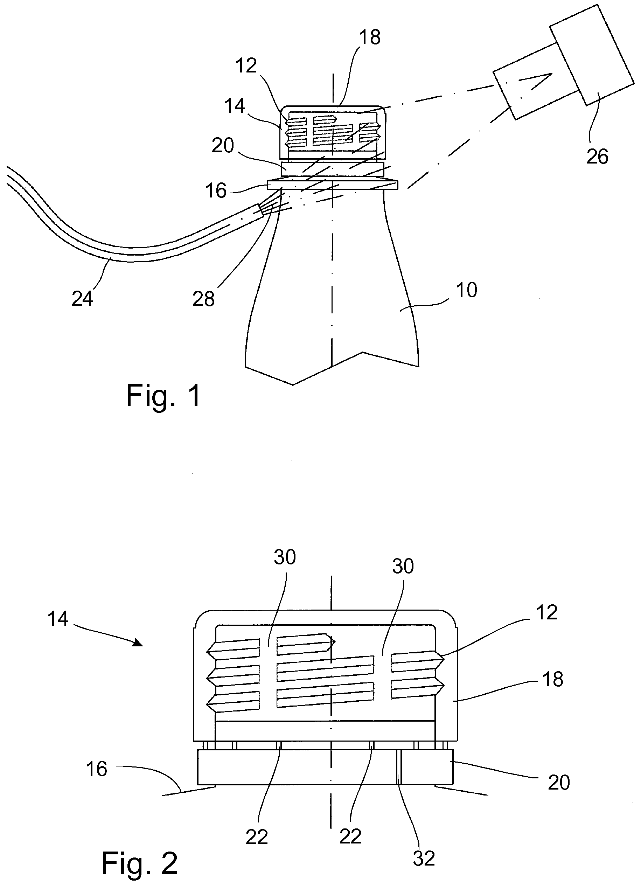

In Figur 1 ist der Hals und die Mündung einer PET-Getränkeflasche 10 dargestellt. An der Mündung der Getränkeflasche 10 ist ein Gewinde 12 angeformt, auf das ein Schraubverschluss 14 aufgeschraubt ist. Einige Millimeter unterhalb des Gewindes 12 ist an dem Flaschenhals ferner ein umlaufender Tragring 16 angeformt. Der Schraubverschluss 14 besteht aus einem oberen kappenförmigen Teil 18 und einem Sicherungsring 20, der mittels kurzer Verbindungsstege 22 etwa 1 mm von dem kappenförmigen Teil 18 abgehängt ist.

Die Getränkeflasche 10 wird auf einem nicht dargestellten Transporteur gefördert, wobei die Transportrichtung normal zur Zeichnungsebene liegt. Auf der einen Seite (in Figur 1 auf der linken Seite) des Halses der Getränkeflasche 10 ist eine Beleuchtungseinheit in Form einer Lichtleitfaser 24 angeordnet und auf der gegenüberliegenden Seite ist eine CCD-Kamera 26 angeordnet. Das von den Lichtleitfasern 24 abgegebene Strahlenbündel 28 liegt etwa auf der optischen Achse der CCD-Kamera 26. Das Ende der Lichtleitfasern 24 ist unterhalb des Tragringes 16 positioniert und zeigt unter einem Winkel von etwa 30° nach oben. Der Öffnungswinkel des Strahlenbündels 28 beträgt ebenfalls etwa 30°, so dass die gegenüberliegende Seite des Mündungsbereichs der Getränkeflasche 10 von innen beleuchtet wird. Durch die Wölbung der Gewindegänge des Gewindes 12 wird der betreffende Teil des Strahlenbündels 28 auf die anliegende Innenseite des kappenförmigen Teils 18 des Schraubverschlusses 14 fokussiert, so dass jeder Gewindegang von der CCD-Kamera 26 als scharfe Linie wahrgenommen wird.

Die Gewindegänge sind durch senkrecht verlaufende Entlüftungsschlitze 30 unterbrochen (Figur 2). Die kantigen Enden der Gewindegänge entlang der Entlüftungsschlitze 30 bündeln das Licht ebenfalls und sind daher von der CCD-Kamera 26 klar erkennbar.

In Figur 1 ist nur eine Lichtleitfaser 24 und eine CCD-Kamera 26 dargestellt, tatsächlich sind jedoch auf jeder Seite zwei Lichtleitfasern und zwei CCD-Kameras angeordnet, die jeweils um etwa 90° zueinander versetzt sind, so dass der gesamte Umfang des Schraubverschlusses 14 erfasst wird.

Wie man in Figur 2 erkennt, unterbricht jeder Entlüftungsschlitz 30 jeden der Gewindegänge in einer anderen Höhe. Daraus lässt sich die Winkelposition oder Drehlage der Getränkeflasche 10 gegenüber der optischen Achse der CCD-Kamera 26 bestimmen.

In Figur 2 ist ferner erkennbar, dass der Sicherungsring 20 eine Sollbruchstelle 32 aufweist. Anhand dieser Sollbruchstelle 32 lässt sich ferner die Winkelposition oder Drehlage des Schraubverschlusses 14 gegenüber der optischen Achse der CCD-Kamera 26 bestimmen.

Aus einem Vergleich der Winkelposition der Getränkeflasche 10 und der Winkelposition des Schraubverschlusses 14 lässt sich sodann ermitteln, wie weit der Schraubverschluss 14 auf die Getränkeflasche 10 aufgeschraubt wurde, d.h. die relative Winkelposition des Schraubverschlusses 14 gegenüber der Getränkeflasche 10. Wenn diese relative Winkelposition um mehr als 7° oder vorzugsweise 3° von dem Sollwert dieser Winkelposition abweicht, so wird die betreffende Getränkeflasche 10 aus dem weiteren Produktionsverfahren ausgesondert.

**Bezugszeichenliste**

| | | | |
|---|---|---|---|
| 10 | Flasche | 22 | Verbindungsstege |
| 12 | Gewinde | 24 | Lichtleitfaser |
| 14 | Schraubverschluss | 26 | CCD-Kamera |
| 16 | Tragring | 28 | Strahlenbündel |
| 18 | kappenförmiger Teil | 30 | Entlüftungsschlitze |
| 20 | Sicherungsring | 32 | Sollbruchstelle |

## Patentansprüche

1. Verfahren zum berührungslosen Prüfen, ob ein Drehmoment, das zum Öffnen eines auf eine Flasche (10) aufgeschraubten Kunststoff-Schraubverschlusses (14) notwendig ist, einem vorgegebenen Wert entspricht, wobei mittels Bildauswertung anhand einer Markierung an der Flasche (10) und einer Markierung an dem Schraubverschluss (14) die Drehlage des aufgeschraubten Kunststoff-Schraubverschlusses (14) gegenüber der Flasche (10) festgestellt wird, wobei die Feststellung der Drehlage der Flasche (10) oder des Schraubverschlusses (14) erfolgt, indem die Außenseite des Schraubverschlusses (14) mittels einer Kamera (26) erfasst wird und die erfasste Abbildung hinsichtlich der relativen Drehlage des Schraubverschlusses (14) gegenüber der Flasche (10) ausgewertet wird, wobei der vorgegebene Wert des Drehmoments einer vorgegebenen relativen Drehlage des Schraubverschlusses (14) gegenüber der Flasche (10) entspricht, **dadurch gekennzeichnet, dass** eine Beleuchtung der Innenseite der Flaschenmündung mittels eines Strahlenbündels (28) einer Lichtquelle (24) erfolgt, das unterhalb des Schraubverschlusses (14) schräg nach oben so auf eine Seite der Flasche (10) gerichtet wird, dass auf der gegenüberliegenden Seite der Flasche (10) die Flaschenmündung von innen beleuchtet wird.

2. Verfahren nach Anspruch 1, wobei die Flasche (10) zumindest im Bereich des Flaschenhalses aus transparentem Material besteht.

3. Verfahren nach Anspruch 1 oder 2, wobei Anfang und/oder Ende des Schraubgewindes (12) am Flaschenhals als Markierung zur Feststellung der Drehlage der Flasche verwendet wird.

4. Verfahren nach einem der vorausgehenden Ansprüche, wobei für die Feststellung der Drehlage der Flasche (10) mindestens zwei Markierungen ausgewertet werden.

5. Verfahren nach Anspruch 4, wobei eine Markierung der Anfang und/oder das Ende des Schraubgewindes (12) am Flaschenhals ist und eine zweite Markierung Entlüftungsschlitze (30) sind, die die Gewindegänge des Schraubgewindes (12) am Flaschenhals unterbrechen.

6. Verfahren nach einem der vorausgehenden Ansprüche, wobei mindestens zwei Markierungen des Schraubverschlusses (14) zur Feststellung der Drehlage des Schraubverschlusses (14) verwendet wird.

7. Verfahren nach einem der vorausgehenden Ansprüche, wobei eine Sollbruchstelle (32) an einem Sicherungsring (20) des Schraubverschlusses (14), das Gewinde des Schraubverschlusses (14), ein Entlüftungsschlitz in dem Schraubverschluss (14) und/oder eine Variation in einer Riffelung des Umfangs des Schraubverschlusses (14) als Markierung zur Feststellung der Drehlage des Schraubverschlusses (14) verwendet werden.

8. Verfahren nach Anspruch 7, wobei der Schraubverschluss (14) als Markierung mit mindestens einer derartigen Markierung versehen ist, dass sich im Öffnungswinkel einer Kamera, die für die Bildauswertung eingesetzt wird, immer mindestens eine Markierung befindet.

9. Verfahren nach Anspruch 1 oder 2, wobei das Schraubgewinde (12) am Flaschenhals und das Schraubgewinde im Schraubverschluss (14) Entlüftungsschlitze aufweisen, die sich bei dem vorgegebenen Wert des Drehmoments genau gegenüber liegen oder einen vorgegebenen Winkelabstand zueinander aufweisen.

10. Vorrichtung zur Durchführung des Verfahrens nach einem der vorausgehenden Ansprüche, mit mindestens einer Lichtquelle (24) auf einer Seite eines durchlaufenden Stroms von Flaschen (10), die mittels Kunststoff-Schraubverschlüssen (14) verschlossen sind, wobei die Lichtquelle (24) ein Strahlenbündel (28) an einer Stelle unterhalb des Schraubverschlusses (14) so auf die jeweils untersuchte Flasche (10) richtet, dass die der Stelle gegenüberliegende Innenseite der Flasche (10) und des Schraubverschlusses (14) beleuchtet wird, mit mindestens einer Kamera (26) auf der anderen, der Lichtquelle (24) gegenüberliegenden Seite des Flaschenstroms, die das Bild der Außenseite der beleuchteten Innenseite erfasst, und mit einer Einrichtung zur Auswertung des erfassten Bildes zur Bestimmung der relativen Drehlage der Flasche (10) gegenüber dem Schraubverschluss (14).

## Claims

1. Method for checking, without contact, whether a torque which is required to open a plastic screw closure (14) which is screwed onto a bottle (10) corresponds to a predetermined value, wherein the rotational position of the screwed-on plastic screw closure (14) with respect to the bottle (10) is established by means of image evaluation by means of a marking on the bottle (10) and a marking on the screw closure (14), wherein the rotational position of the bottle (10) or of the screw closure (14) is established by capturing the external side of the screw closure (14) by means of a camera (26) and evaluating the captured image regarding the relative rotational position of the screw closure (14) with respect to the bottle (10), wherein the predetermined value of the torque corresponds to a predetermined value of the relative rotational position of the screw closure (14) with respect to the bottle (10), **characterized in that** an illumination of the inside of the bottle mouth is established by means of a bundle of rays (28) of a light source (24), which is directed underneath the screw closure (14) at an angle upwards at a side of the bottle (10) such that on the opposite side of the bottle (10) the bottle mouth is illuminated from the inside.

2. Method according to claim 1, wherein the bottle (10) consists of transparent material at least in the region of the bottle neck.

3. Method according to claim 1 or 2, wherein the start and/or end of the screw thread (12) on the bottle neck is used as a marking for establishing the rotational position of the bottle.

4. Method according to one of the previous claims, wherein at least two markings are evaluated for establishing the rotational position of the bottle (10).

5. Method according to claim 4, wherein one marking is the start and/or end of the screw thread (12) on the bottle neck and a second marking is ventilation slots (30) which interrupt the thread turns of the screw thread (12) on the bottle neck.

6. Method according to one of the previous claims, wherein at least two markings of the screw closure (14) are used for establishing the rotational position of the screw closure (14).

7. Method according to one of the previous claims, wherein a predetermined breaking point (32) on a securing ring (20) of the screw closure (14), the thread of the screw closure (14), a ventilation slot in the screw closure (14) and/or a variation in a fluting of the circumference of the screw closure (14) are used as a marking for establishing the rotational position of the screw closure (14).

8. Method according to claim 7, wherein the screw closure (14) is provided with at least one such marking as a marking such that at least one marking is always located in the angle of aperture of a camera which is used for the image evaluation.

9. Method according to claim 1 or 2, wherein the screw thread (12) on the bottle neck and the screw thread in the screw closure (14) have ventilation slots which, at the predetermined value of the torque, are precisely opposite or have a predetermined angular distance from each other.

10. Apparatus for carrying out the method according to one of the previous claims, with at least one light source (24) on one side of a continuous flow of bottles (10) which are closed by means of plastic screw closures (14), wherein the light source (24) directs a bundle of rays (28) at a point underneath the screw closure (14) towards the respectively examined bottle (10) in such a way that the internal side of the bottle (10) and of the screw closure (14) opposite the point is illuminated, with at least one camera (26) on the other side of the bottle flow which is opposite the light source (24), which captures the image of the external side of the illuminated internal side, and with a device for evaluating the captured image for determining the relative rotational position of the bottle (10) with respect to the screw closure (14).

## Revendications

1. Procédé de vérification, sans contact, qu'un couple nécessaire pour ouvrir un bouchon à vis en plastique (14) qui est vissé sur une bouteille (10) correspond ou non à une valeur prédéterminée, dans lequel la position de rotation du bouchon à vis en plastique vissé (14) par rapport à la bouteille (10) est établie au moyen d'une évaluation d'image d'un repère sur la bouteille (10) et d'un repère sur le bouchon à vis (14), dans lequel la position de rotation de la bouteille (10) ou du bouchon à vis (14) est établie en ce que le côté externe du bouchon à vis (14) est capturé au moyen d'une caméra (26) et l'image capturée est évaluée en terme de position de rotation relative du bouchon à vis (14) par rapport à la bouteille (10), dans lequel la valeur prédéterminée du couple correspond à une position de rotation relative prédéterminée du bouchon à vis (14) par rapport à la bouteille (10),
**caractérisé en ce que**
le côté interne de l'embouchure de la bouteille est éclairé au moyen d'un faisceau de rayons (28) d'une source de lumière (24), qui est orienté en dessous du bouchon à vis (14) à un angle vers le haut au niveau d'un côté de la bouteille (10) de telle sorte que l'embouchure de la bouteille soit éclairée depuis l'intérieur sur le côté opposé de la bouteille (10).

2. Procédé selon la revendication 1, dans lequel la bouteille (10) consiste en un matériau transparent au moins dans la région du goulot de la bouteille.

3. Procédé selon la revendication 1 ou 2, dans lequel le début et/ou la fin du filetage de vis (12) sur le goulot de la bouteille est utilisé comme repère pour établir la position de rotation de la bouteille.

4. Procédé selon l'une quelconque des revendications précédentes, dans lequel au moins deux repères sont évalués pour établir la position de rotation de la bouteille (10).

5. Procédé selon la revendication 4, dans lequel un repère constitue le début et/ou la fin du filetage de vis (12) sur le goulot de la bouteille et un second repère consiste en fentes de ventilation (30) qui interrompent les spires de filetage du filetage de vis (12) sur le goulot de la bouteille.

6. Procédé selon l'une quelconque des revendications précédentes, dans lequel au moins deux repères du bouchon à vis (14) sont utilisés pour établir la position de rotation du bouchon à vis (14).

7. Procédé selon l'une quelconque des revendications précédentes, dans lequel un point de rupture prédéterminé (32) sur une bague de fixation (20) du bouchon à vis (14), le filetage du bouchon à vis (14), une fente de ventilation dans le bouchon à vis (14) et/ou une variation de cannelures de la circonférence du bouchon à vis (14) sont utilisés comme repère pour établir la position de rotation du bouchon à vis (14).

8. Procédé selon la revendication 7, dans lequel le bouchon à vis (14) est doté d'au moins un tel repère comme repère de telle sorte qu'au moins un repère soit toujours situé dans l'angle d'ouverture d'une caméra qui est utilisée pour l'évaluation d'image.

9. Procédé selon la revendication 1 ou 2, dans lequel le filetage de vis (12) sur le goulot de la bouteille et le filetage de vis dans le bouchon à vis (14) comportent des fentes de ventilation qui, à la valeur prédéterminée du couple, sont précisément opposées ou ont une distance angulaire prédéterminée les unes par rapport aux autres.

10. Appareil destiné à exécuter le procédé selon l'une des revendications précédentes, avec au moins une source de lumière (24) sur un coté d'un flux continu de bouteilles (10) qui sont bouchées par des bouchons à vis en plastique (14), dans lequel la source de lumière (24) dirige un faisceau de rayons (28) à un point en dessous du bouchon à vis (14) vers la bouteille respective examinée (10) de telle manière que le côté interne de la bouteille (10) et du bouchon à vis (14) opposé au point soit éclairé, avec au moins une caméra (26) sur l'autre côté du flux de bouteilles qui est opposé à la source de lumière (24), qui capture l'image du côté externe du côté interne éclairé, et avec un dispositif pour évaluer l'image capturée afin de déterminer la position de rotation relative de la bouteille (10) par rapport au bouchon à vis (14).
